# EUROPEAN PATENT APPLICATION

(11) **EP 1 737 015 A2**
(43) Date of publication of application: **27.12.2006**
(21) Application number: 05258113.9
(22) Date of filing: 30.12.2005
(51) Int. Cl.: H01J 17/49

(54) **Plasma display panel and manufacturing method thereof**

(30) Priority: 14.04.2005 KR 2005031209
(71) Applicant: LG Electronics Inc., Seoul 150-721 (KR)
(72) Inventor: Moon, Won Seok, Seocho-gu Seoul (KR); Kim, Jeseok, Anyang-si Gyeonggi-do (KR); Ryu, Byunggil, Dongdaemun-gu Seoul (KR)
(74) Representative: Camp, Ronald

(57) **Abstract**

A plasma display panel comprises a plurality of discharge cells on which a Red phosphor, a Green phosphor and a Blue phosphor are coated, and a plurality of barrier ribs that partition the discharge cells having different phosphors coated thereon. A color layer having a predetermined color is formed on at least one of the plurality of barrier ribs. Color layers are formed on barrier ribs of the plasma display panel to enhance a color temperature of phosphors coated on discharge cells. Accordingly, both emission efficiency and brightness can be improved.

## Description

The present invention relates to a plasma display panel. It more particularly relates to a plasma display panel comprising barrier ribs and a manufacturing method thereof.

In a plasma display panel, a barrier rib formed between a front panel and a rear panel forms one unit cell. Each cell is filled with a primary discharge gas, such as neon (Ne), helium (He) or a mixed gas of Ne and He, and an inert gas containing a small amount of xenon. If the inert gas is discharged with a high frequency voltage, it generates vacuum ultraviolet radiation. The vacuum ultraviolet radiation excites phosphors formed between the barrier ribs, thus implementing images. This plasma display panel can be manufactured to be thin, and has been considered as one of the next-generation display devices.

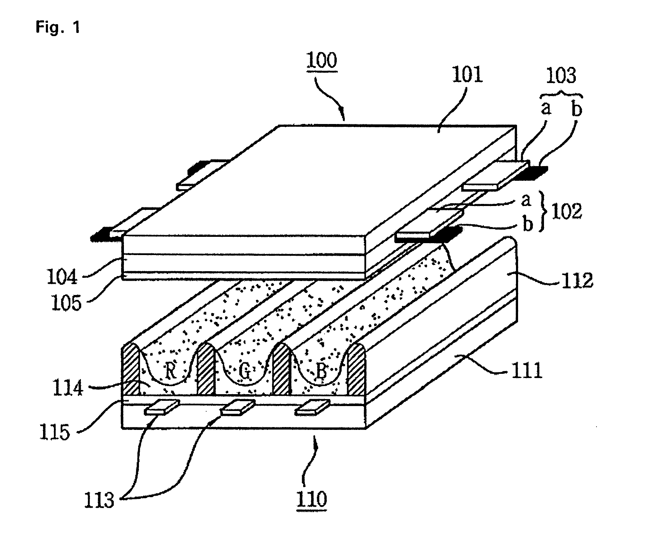

FIG. 1 illustrates the construction of a conventional plasma display panel.

Referring to FIG. 1, the plasma display panel comprises a front panel 100 and a rear panel 110. In the front panel 100, a plurality of sustain electrode pairs in which a plurality of scan electrodes 102 and sustain electrodes 103 form pairs are arranged on a front glass 101, i.e., a display surface on which images are displayed. In the rear panel 110, a plurality of address electrodes 113 disposed to intersect the plurality of sustain electrode pairs are arranged on a rear glass 111, i.e., a rear surface. The front panel 100 and the rear panel 110 are parallel to each other with a predetermined distance therebetween.

The front panel 100 comprises the pairs of scan electrodes 102 and sustain electrodes 103, which mutually discharge and maintain the emission of a cell in one discharge cell. In other words, the scan electrode 102 and the sustain electrode 103 have a transparent electrode "a" made of a transparent ITO material and a bus electrode "b" made of a metal material. The scan electrodes 102 and the sustain electrodes 103 are covered with one or more upper dielectric layers 104 for limiting the discharge current and providing insulation among electrode pairs. A protection layer 105 having magnesium oxide (MgO) deposited thereon is formed on the dielectric layers 104 to facilitate a discharge condition.

In the rear panel 110, on the rear glass 111 are disposed address electrodes 113 to intersect the scan electrodes 102 and the sustain electrodes 103, which are arranged on the front glass 101 in parallel. A lower dielectric layer 115 is formed on the address electrodes 113. Barrier ribs 112 that partition discharge cells are formed on the lower dielectric layer 115. A phosphor layer 114 is coated on spaces between the discharge cells to generate any one of R (red), G (green) and B (blue) visible light.

In the conventional plasma display panel constructed above, the barrier ribs 112 for forming a plurality of discharge spaces, i.e., discharge cells on the rear panel is classified into a stripe type and a well type depending on its structure. This structure of the barrier ribs 112 can be designed in various ways on depending factors such as brightness, exhaust characteristics, a phosphor coating area, and so on.

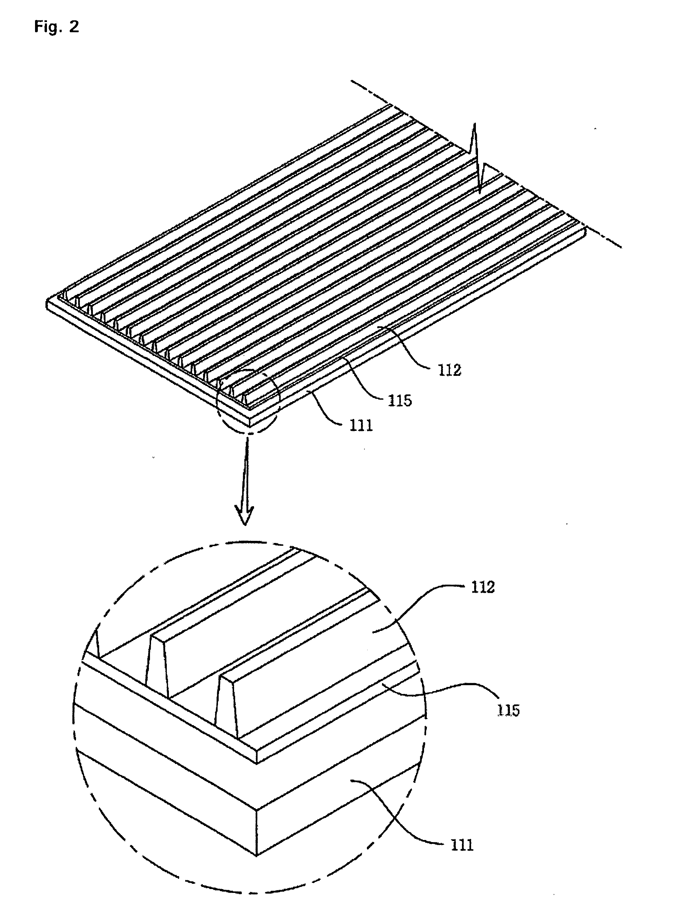

FIG. 2 illustrates the stripe type barrier rib structure of the conventional plasma display panel.

FIG. 2 shows the stripe type structure in which the barrier ribs 112, which are formed on the lower dielectric layer 115 on the rear glass 111, are arranged in a row. The barrier ribs 112 are arranged vertical to the scan electrodes (not shown) and the sustain electrodes (not shown) comprised of the bus electrode and the transparent electrode. In the stripe type barrier rib structure, since the bus electrodes are exposed on the discharge spaces, interaction between the bus electrodes and the address electrode 113 of the rear glass 111 is smooth and a manufacturing process is simple.

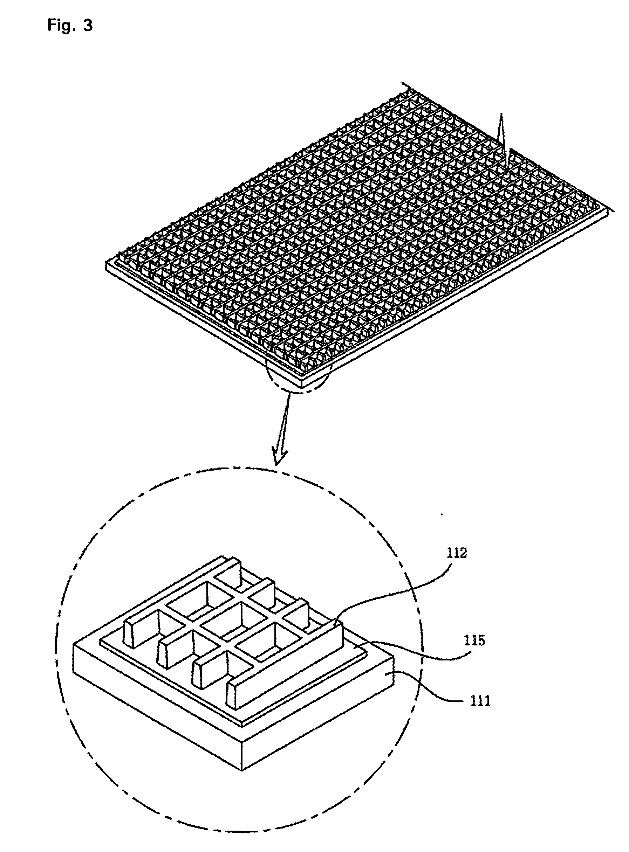

FIG. 3 illustrates the well type barrier rib structure of the conventional plasma display panel.

FIG. 3 shows the well type structure in which the barrier ribs 112 formed on the lower dielectric layer 115 on the rear glass 111 have a lattice form. The barrier ribs 112 are arranged vertically or horizontally to the scan electrodes (not shown) and the sustain electrodes (not shown) comprised of a bus electrode and a transparent electrode.

The barrier ribs forms the Red discharge cell, the Green discharge cell and the Blue discharge cell, respectively. The phosphor layer is coated between the barrier ribs. The barrier ribs generate visible light upon discharge. The barrier ribs have a top surface processed with a black color to improve brightness and darkness contrast of the plasma display panel.

However, if the top surface of the barrier ribs is processed with a black color to improve contrast, the black color on the barrier ribs partially absorbs visible light generated at the time of discharge of the coated phosphor layer. Accordingly, a problem arises in that emission efficiency and brightness decreases since the color temperature of the plasma display panel decreases.

The present invention seeks to provide an improved plasma display apparatus.

In accordance with a first aspect of the invention, there is provided a plasma display panel comprising: a plurality of discharge cells on which a Red phosphor, a Green phosphor and a Blue phosphor are coated, and a plurality of barrier ribs that partition the discharge cells having different phosphors coated thereon. A color layer having a predetermined color is formed on at least one of the plurality of barrier ribs.

In accordance with another aspect of the invention, a plasma display panel comprises a plurality of discharge cells on which a Red phosphor, a Green phosphor and a Blue phosphor are coated, and a plurality of row barrier ribs partitioning discharge cells having the same phosphor coated thereon, of the plurality of discharge cells, and a plurality of column barrier ribs partitioning discharge cells having different phosphors coated thereon, of the plurality of discharge cells. A color layer having a predetermined color is formed on at least one of the plurality of row barrier ribs and column barrier ribs.

In accordance with another aspect of the invention, a method of manufacturing a plasma display panel comprises the steps of (a) coating a barrier rib paste on a dielectric material formed in a glass, (b) locating photomasks having a predetermined pattern formed therein on the barrier rib paste, and performing an exposure and development process on the photomasks to form a plurality of barrier ribs that partition discharge cells having different phosphors coated thereon, and (c) forming color layers having a predetermined color on at least one of the plurality of barrier ribs.

Another aspect of the invention provides a plasma display panel comprising: a plurality of discharge cells on which a Red phosphor, a Green phosphor and a Blue phosphor are coated, and a plurality of barrier ribs that partition the discharge cells having different phosphors coated thereon. A color layer having a predetermined color is formed on at least one of the plurality of barrier ribs.

Color layers having the same color as the color of any one of phosphors of adjacent discharge cells may be formed on at least one of the plurality of barrier ribs.

The color layer may comprises a first color and a second color. The first color may be the same as the color of a phosphor which is coated on one of two discharge cells partitioned by one barrier rib on which the color layer is formed. And the second color may be the same as the color of a phosphor which is coated on the other of two discharge cells partitioned by the one barrier rib on which the color layer is formed.

The first color of the color layer formed on the right portion of the one barrier rib may be the same as the color of a phosphor coated on the a discharge cell located at the right side of the one barrier rib, and the second color of the color layer formed on the left portion of the one barrier rib may be the same as the color of a phosphor coated on a discharge cell located at the left side of the one barrier rib.

A black color layer may be formed on each of one or more barrier ribs located at a predetermined region beginning from the outermost barrier rib of the plurality of barrier ribs.

The area of the color layer formed on one or more barrier ribs adjacent to the discharge cell on which the Blue phosphor is coated, may be larger the area of the color layer formed on one or more barrier ribs adjacent to the Red discharge cell or the Green discharge cell.

In accordance with another aspect of the invention, a plasma display panel comprises a plurality of discharge cells on which a Red phosphor, a Green phosphor and a Blue phosphor are coated, and a plurality of row barrier ribs partitioning discharge cells having the same phosphor coated thereon, of the plurality of discharge cells, and a plurality of column barrier ribs partitioning discharge cells having different phosphors coated thereon, of the plurality of discharge cells. A color layer having a predetermined color is formed on at least one of the plurality of row barrier ribs and column barrier ribs.

Color layers having the same color as that of any one of phosphors of adjacent discharge cells may be formed on at least one of the plurality of column barrier ribs.

The color layer may comprise a first color and a second color. The first color may be the same as the color of a phosphor which is coated on one of two discharge cells partitioned by one column barrier rib on which the color layer is formed. The second color may be the same as the color of a phosphor which is coated on the other of two discharge cells partitioned by the one column barrier rib on which the color layer is formed.

The first color of the color layer formed on the right portion of the one column barrier rib may be the same as the color of a phosphor coated on the a discharge cell located at the right side of the one barrier rib, and the second color of the color layer formed on the left portion of the column one barrier rib may be the same as the color of a phosphor coated on a discharge cell located at the left side of the one barrier rib.

A black color layer may be formed on each of one or more row barrier ribs located at a predetermined region beginning from the outermost row barrier rib of the plurality of row barrier ribs.

A black color layer may be formed on each of one or more column barrier ribs located at a predetermined region beginning from the outermost column barrier rib of the plurality of column barrier ribs.

The area of the color layer formed on one or more barrier ribs of the row barrier ribs and the column barrier ribs adjacent to the discharge cell on which the Blue phosphor is coated, may be larger the area of the color layer formed on one or more barrier ribs of the row barrier ribs and the column barrier ribs adjacent to the Red discharge cell or the Green discharge cell.

In accordance with another aspect of the invention, a method of manufacturing a plasma display panel comprises the steps of (a) coating a barrier rib paste on a dielectric material formed in a glass, (b) locating photomasks having a predetermined pattern formed therein on the barrier rib paste, and performing an exposure and development process on the photomasks to form a plurality of barrier ribs that partition discharge cells having different phosphors coated thereon, and (c) forming color layers having a predetermined color on at least one of the plurality of barrier ribs.

The color layers may be formed by a direct patterning method.

The direct patterning method may be either an inkjet method or a dispensing method.

In accordance with another aspect of the invention, a method of manufacturing a plasma display panel comprises the steps of (a) coating a barrier rib paste on a dielectric material formed in a glass, (b) locating photomasks having a predetermined pattern formed therein on the barrier rib paste, and performing an exposure and development process on the photomasks to form a plurality of row barrier ribs and a plurality of column barrier ribs, and (c) forming color layers having a predetermined color on at least one of the plurality of barrier ribs.

The color layers may be formed by a direct patterning method.

The row barrier ribs and the column barrier ribs may have different heights.

Barrier ribs having a higher height, of the row barrier ribs and the column barrier ribs, may be column barrier ribs.

Embodiments of the invention will now be described by way of non-limiting example only with reference to the drawings in which:

FIG. 1 illustrates the construction of a conventional plasma display panel;

FIG. 2 illustrates a stripe type barrier rib structure of the conventional plasma display panel;

FIG. 3 illustrates a well type barrier rib structure of the conventional plasma display panel;

FIG. 4 illustrates a barrier rib structure of a plasma display panel according to a first embodiment of the present invention;

FIGS. 5a to 5d illustrate a method in which color layers are formed on the barrier ribs of the plasma display panel according to a first embodiment of the present invention;

FIGS. 6a to 6d sequentially illustrate a method of fabricating the barrier ribs of the plasma display panel according to a first embodiment of the present invention;

FIG. 7 illustrates a barrier rib structure of a plasma display panel according to a second embodiment of the present invention;

FIGS. 8a to 8d illustrates a method in which color layers are formed on the barrier ribs of the plasma display panel according to a second embodiment of the present invention; and

FIGS. 9a to 9d sequentially illustrate a method of fabricating the barrier ribs of the plasma display panel according to a second embodiment of the present invention.

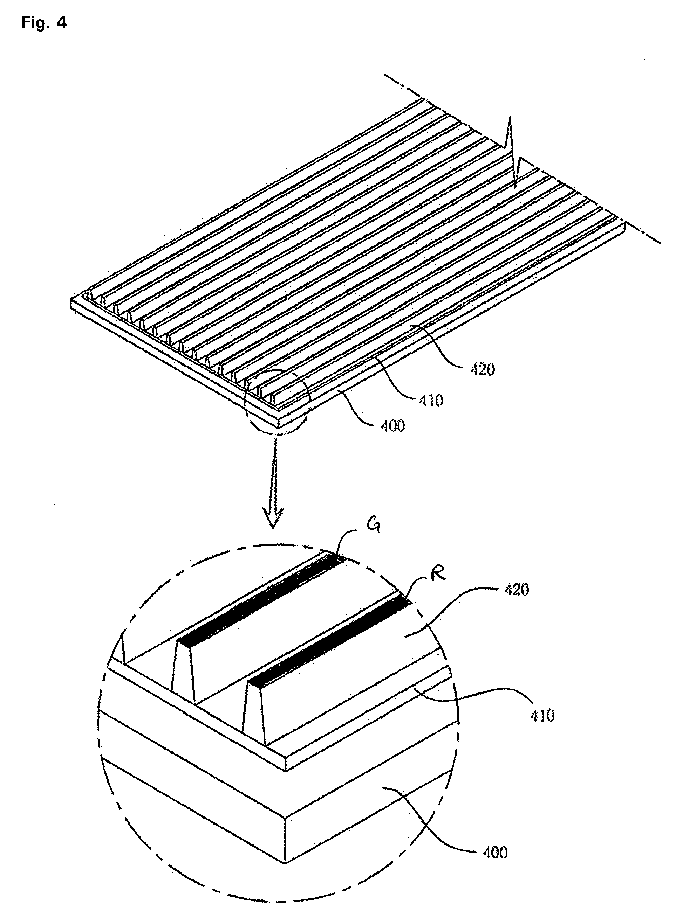

Before a detailed description of the embodiment of FIG. 4 is given, the structure of the plasma display panel according to the present embodiment will first be briefly described. Though not shown in FIG. 4, the plasma display panel according to a first embodiment of the present invention comprises a front panel on which images are displayed, i.e., a display surface, and a rear panel forming a rear surface. The front panel and the rear panel are parallel to each other with a predetermined distance therebetween.

The front panel comprises sustain electrode pairs in which scan electrodes and sustain electrodes are formed in pairs on a front glass. An upper dielectric layer is laminated on the front glass in which the scan electrodes and the sustain electrodes are arranged in parallel, limiting the discharge current. A protection layer, on which magnesium oxide (MgO) is deposited for preventing sputtering, which is generated during the discharge of plasma damage, from damaging the upper dielectric layer, and for enhancing emission efficiency of secondary electrons, is formed on an upper dielectric layer.

Address electrodes intersecting the sustain electrodes that are arranged in parallel on the front glass are disposed on a rear glass of the rear panel. A lower dielectric layer on which wall charges are accumulated is formed on the address electrodes. Barrier ribs partitioning discharge cells are formed on the lower dielectric layer. A phosphor layer is coated on spaces between the discharge cells to generate any one of Red, Green and Blue visible light.

The barrier ribs formed in the plasma display panel according to the first embodiment have a stripe type in which the barrier ribs 420 are formed on the lower dielectric layer 410 of the rear glass 400 to partition the discharge cells, as shown in FIG. 4. Color layers are formed on at least one of the plurality of barrier ribs 420 having this structure. The color layers formed on the barrier ribs 420 have the same color as the color of the phosphor of adjacent discharge cells. The Red, Green, Blue color layer arrangement is the same as the Red, Green, Blue phosphor color arrangement of the discharge cells. As described above, the barrier rib structure of the plasma display panel in which the color layers are formed according to a first embodiment will be described below in more detail. In the enlarged detail G and R represent green and red respectively.

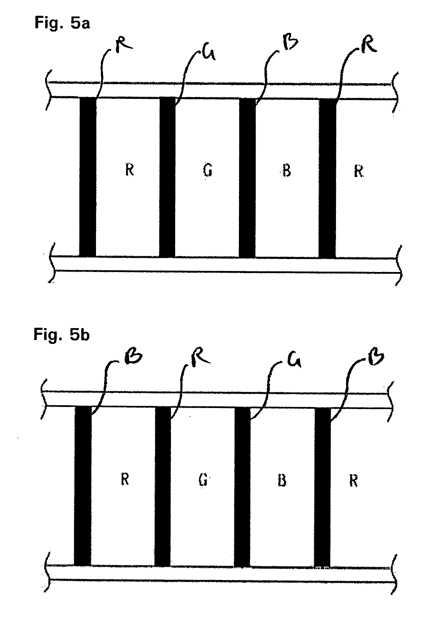

Referring to FIG. 5a, the color layer formed on the barrier rib that forms the left boundary of one discharge cell has the same color as the color of the phosphor coated on the one discharge cell. R G and B represent Red Green and Blue.

Referring to FIG. 5b, contrary to FIG. 5a, the color layer formed on the barrier rib that forms the right boundary of one discharge cell has the same color as the color of the phosphor coated on the one discharge cell.

As shown in FIGS. 5a and FIG. 5b, the color layers R G B formed on the barrier ribs of the plasma display panel according to the first embodiment can have the same color as the phosphor colors of the adjacent discharge cells regardless of its arrangement.

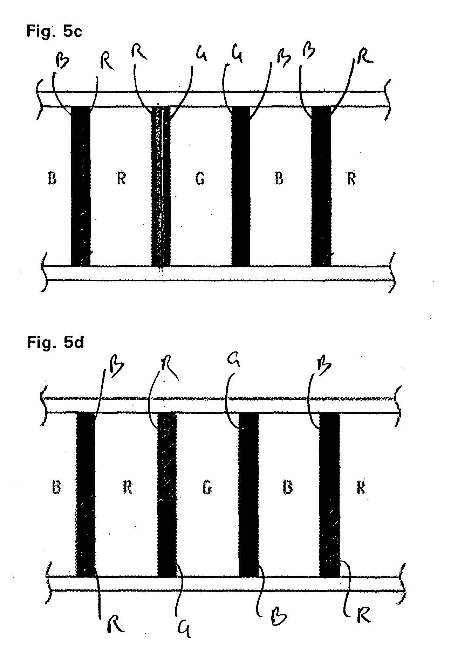

Referring to FIG. 5c and FIG. 5d, the color layers formed on the barrier ribs of the plasma display panel according to a first embodiment have both the colors of phosphors of two adjacent discharge cells. If the color of phosphor coated on one of the adjacent discharge cells is a first color. The color of phosphors coated on the other of the adjacent discharge cells is a second color. The color layers formed on the barrier ribs have both the first color and the second color. The first color is the same as the color of a phosphor which is coated on one of two discharge cells partitioned by one barrier rib on which the color layer is formed, and the second color is the same as the color of a phosphor which is coated on the other of two discharge cells partitioned by the one barrier rib on which the color layer is formed.

Referring to FIG. 5c, the first color of the color layer formed on the right portion of the one barrier rib is the same as the color of a phosphor coated on the a discharge cell located at the right side of the one barrier rib, and the second color of the color layer formed on the left portion of the one barrier rib is the same as the color of a phosphor coated on a discharge cell located at the left side of the one barrier rib.

Referring to FIG. 5d, the color layer having the first color is formed on the upper part of a barrier rib formed between two discharge cells. The color layer having the second color is formed on the lower part of the barrier rib formed between two discharge cells. The first color is the same as the color of the phosphor formed on one discharge cell of the two discharge cells. The second color is the same as the color of the phosphor formed on the other discharge cell of the two discharge cells.

Alternately, the Blue phosphor of the Red phosphor, the Green phosphor and the Blue phosphor has the lowest emission efficiency. To solve this problem, the area of the color layer formed on one or more barrier ribs adjacent to the discharge cell on which the Blue phosphor is coated, is larger the area of the color layer formed on one or more barrier ribs adjacent to the Red discharge cell or the Green discharge cell.

These color layers comprises R pigment, G pigment and B pigment. The R pigment comprises one, or one or more of a spinel solid solution of ZnO·(Al, Cr, Fe)₂O₃ and ZnO·(Cr, Fe)₂O₃. The G pigment comprises one, or one or more of a spinel solid solution of (Co, Zn) O·(Al, Cr)₂O₃ and 3CaO-Cr₂O₃·3SiO₂. The B pigment comprises one, or one or more of a spinel solid solution of CoOnAl₂O₃ and (Co,Zn)O-nAl₂O₃. n is 2.

A black color layer is formed on the barrier ribs located at a predetermined region from the outermost barrier rib. That is, the black color layer is formed on each of one or more barrier ribs located at a non-effective region comprising the outermost barrier rib.

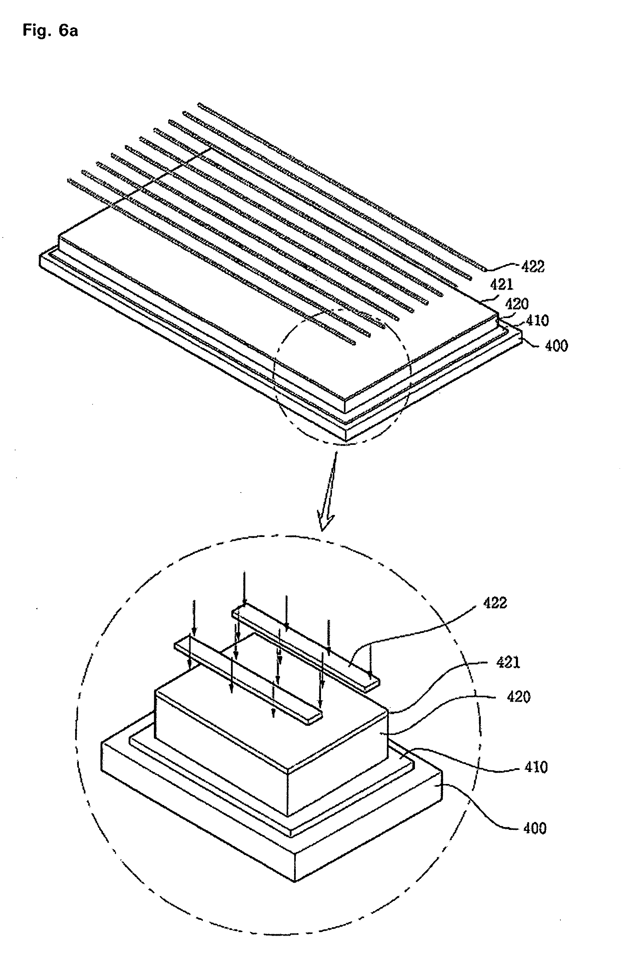

In the manufacturing method of the plasma display panel constructed above according to a first embodiment of the present invention, a process of forming barrier ribs will be described with reference to FIGS. 6a to 6d.

Referring first to FIG. 6a, a lower dielectric layer 410 is formed on a rear glass 400 having electrodes (not shown) mounted therein. A barrier rib paste 420 having a predetermined thickness is formed on the lower dielectric layer 410 by a printing method, a coating method or the like. A dry film resin (hereinafter, referred to as "DFR") 421 is formed on the barrier rib paste by a laminating process. Photomasks 422 having a predetermined pattern are aligned on the DFR 421 and then undergo an exposure process of irradiating light such as UV.

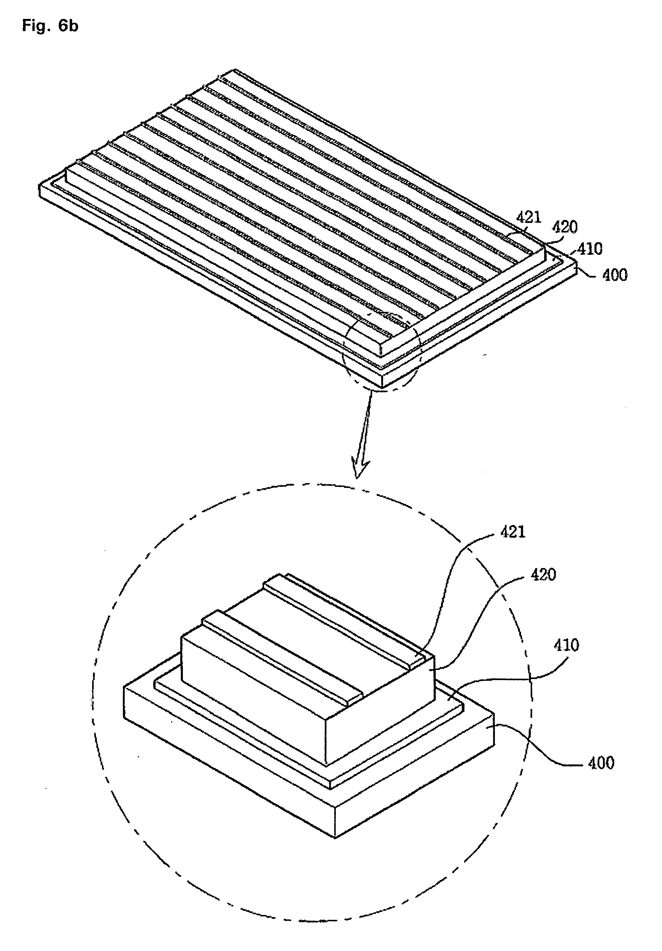

Thereafter, as shown in FIG. 6b, after the DFR 421 experiences an exposure process, a development process is performed. Through this development process, the DFR 421 in a region that is not exposed to light (hereinafter, referred to as "unexposed region") remains on the barrier rib paste 420, whereas the DFR 421 in a region that is exposed to light (hereinafter, referred to as "exposed region") is etched and removed.

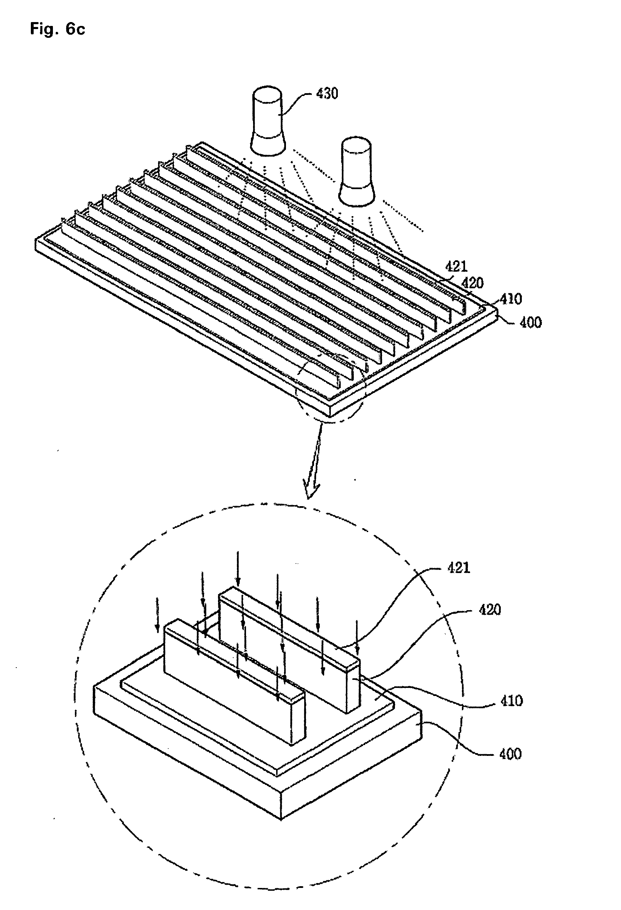

Thereafter, as shown in FIG. 6c, sandblasting apparatuses 430 are disposed on the barrier rib paste 420 and the DFR 421, which have undergone the development process, and are then driven to spray sand particles onto the barrier rib paste. The barrier rib paste 420 is cut, whereas the DFR 421 pattern corresponding to the barrier ribs is protected, due to sputtering of the sand particles.

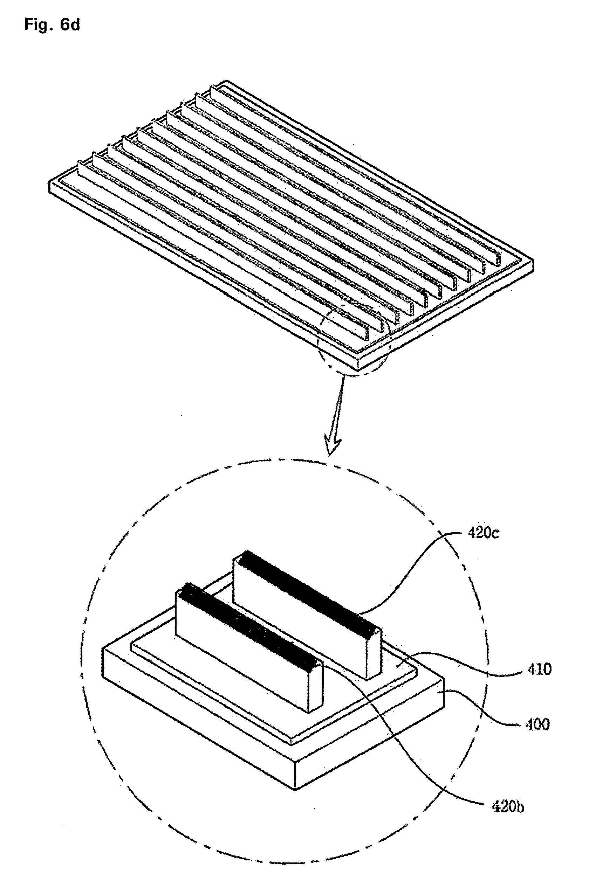

Referring next to FIG. 6d, after a plurality of barrier ribs is formed by performing a strip process on the barrier ribs, which have been protected by the DFR 421, color layers 420b, 420c are formed in at least one of the plurality of barrier ribs by means of a direct patterning method. The color layers 420b, 420c can be formed using an inkjet method or a dispensing method of the direct patterning method.

As shown and described above, the barrier ribs of the present invention have a predetermined pattern by forming the DFR on the barrier rib paste and then performing the exposure process on the DFR, as shown in FIGS. 6a to 6d. Unlike the above, however, the barrier ribs can be formed through the exposure process by comprising a photoresist material in the barrier rib paste itself.

If the color layers are formed to have the same color as that of adjacent phosphors on the barrier ribs of the plasma display panel according to a first embodiment of the present invention, as described above, the color temperature of the plasma display panel can be increased and emission efficiency and brightness can be improved.

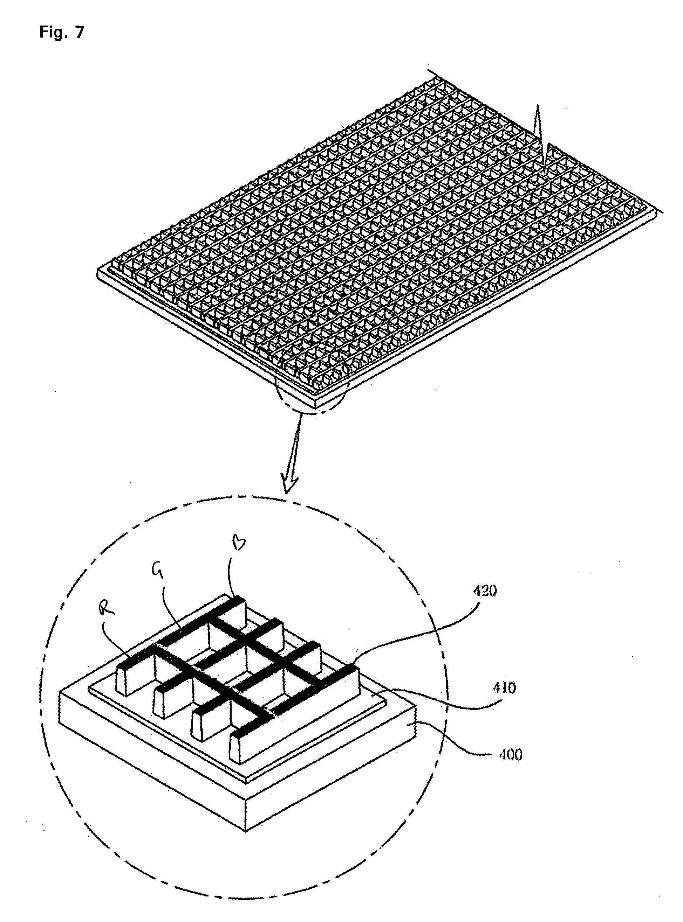

FIG. 7 illustrates a barrier rib structure of a plasma display panel according to a second embodiment.

Though not shown in Fig. 7, the plasma display panel according to a second embodiment also has the same structure as that of the plasma display panel according to a first embodiment. However, barrier ribs formed in the plasma display panel according to the second embodiment have a well type in which row barrier ribs and column barrier ribs 420 are formed on a lower dielectric layer 410 on a rear glass 400 to partition discharge cells, as shown in FIG. 7. The row (lateral) barrier ribs are barrier ribs that partition discharge cells having the same phosphor coated thereon, and the column (longitudinal) barrier ribs are barrier ribs that partition discharge cells having different phosphors coated thereon.

Color layers are formed on the barrier ribs of the plasma display panel according to the second embodiment. These color layers are formed at one or both of the row barrier ribs and the column barrier ribs. That is, the color layers can be formed only on the row barrier ribs or the column barrier ribs, and can be formed both on the row barrier ribs and the column barrier ribs. The structure of the barrier rib on which the color layers are formed, as described above, according to a second embodiment will be described below in more detail.

A case where the color layers are formed only on the row barrier ribs will be first described. The row barrier ribs are barrier ribs that partition discharge cells having the same phosphor coated thereon, as described above. Thus, the color layers are formed using the same color as the color of the phosphor of a corresponding discharge cell that partitions the row barrier ribs.

A black color layer is formed on each of one or more row barrier ribs located at a predetermined region beginning from the outermost row barrier rib. That is, the black color layer is formed on the row barrier ribs located at a non-effective region comprising the outermost row barrier rib.

A case where the color layers are formed only on the column barrier ribs will be then described. The column barrier ribs are barrier ribs that partition discharge cells having different phosphor coated thereon, as described above. Each of the color layers formed on the column layer portioning two discharge cells, has the same color as the color of a phosphor coated on one discharge of the two discharge cells.

A black color layer is formed on the column barrier ribs located at a predetermined region beginning from the outermost column barrier rib. That is, the black color layer is formed on each of one or more column barrier ribs located at a non-effective region comprising the outermost column barrier rib.

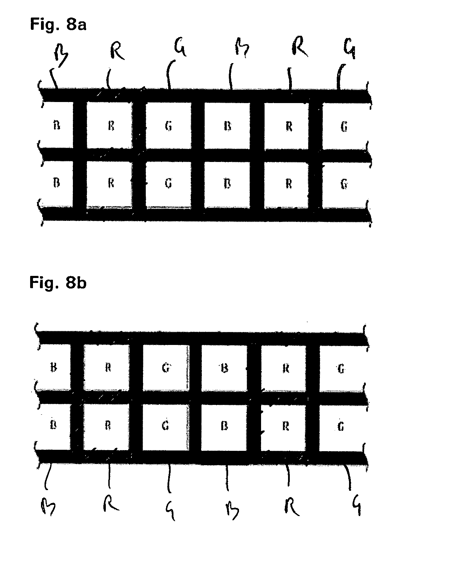

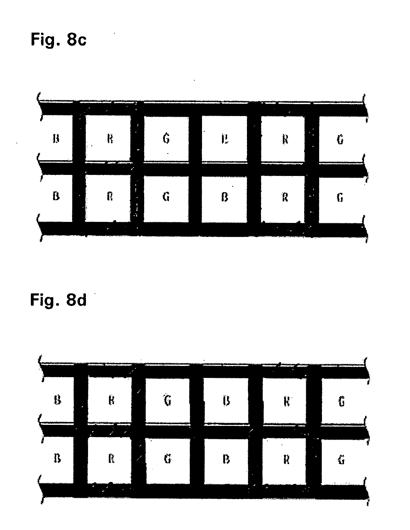

A case where the color layers are formed both on the row barrier ribs and the column barrier ribs will be described below with reference to FIGS. 8a to 8d.

Referring to FIG. 8a, phosphors of adjacent discharge cells are formed on row barrier ribs of the plasma display panel according to the second embodiment. The color layer formed on the column barrier rib that forms the right boundary of one discharge cell has the same color as the color of the phosphor coated on the one discharge cell.

Referring to FIG. 8b, phosphors of adjacent discharge cells are formed on row barrier ribs of the plasma display panel according to the second embodiment. The color layer formed on the column barrier rib that forms the left boundary of one discharge cell has the same color as the color of the phosphor coated on the one discharge cell.

Referring to FIG. 8c and FIG. 8d, color layers on the column barrier ribs form both phosphor colors of two adjacent discharge cells. A first color is the same as the color of a phosphor which is coated on one of two discharge cells partitioned by one column barrier rib on which the color layer is formed, and a second color is the same as the color of a phosphor which is coated on the other of two discharge cells partitioned by the one column barrier rib on which the color layer is formed.

Referring to FIG. 8c, the first color of the color layer formed on the right portion of the one column barrier rib is the same as the color of a phosphor coated on the a discharge cell located at the right side of the one barrier rib. The second color of the color layer formed on the left portion of the column one barrier rib is the same as the color of a phosphor coated on a discharge cell located at the left side of the one barrier rib.

Referring to FIG. 8d, the color layer having the first color is formed on the upper part of the one column barrier rib formed between two discharge cells. The color layer having the second color is formed on the lower part of the barrier rib formed between two discharge cells. The first color is the same as the color of the phosphor formed on one discharge cell of the two discharge cells. The second color is the same as the color of the phosphor formed on the other discharge cell of the two discharge cells.

A black color layer is formed on the column barrier ribs located at a predetermined region beginning from the outermost column barrier rib. That is, the black color layer is formed on the column barrier ribs located at the non-effective region comprising the outermost column barrier rib.

Referring to FIG. 8d, color layers on row barrier ribs of the plasma display panel according to the second embodiment are formed in the same color as that of phosphor of adjacent discharge cells. The color layers on the column barrier ribs form both the phosphor colors of two adjacent discharge cells. Unlike FIG. 8c, however, the color layers need not be formed in the same direction as adjacent discharge cells, but can be formed in the same manner as phosphor colors of adjacent discharge cells.

Alternatively, of the Blue phosphor, the Red phosphor, and the Green phosphor, the Blue phosphor has the lowest emission efficiency. To solve this problem, there is a method of forming color layers formed on the barrier ribs partitioning the Blue discharge cell, which is greater in number than the color layers formed on the barrier ribs partitioning the Red discharge cell and the Green discharge cell when forming the color layers.

These color layers comprises R pigment, G pigment and B pigment. The R pigment comprises one, or one or more of a spinel solid solution of ZnO (Al, Cr, Fe)₂O₃ and ZnO·(Cr, Fe)₂O₃. The G pigment comprises one, or one or more of a spinel solid solution of (Co, Zn) O·(Al, Cr)₂O₃ and 3CaO-Cr₂O₃·3SiO₂ The B pigment comprises one, or one or more of a spinel solid solution of CoOnAl₂O₃ and (Co, Zn)O-nAl₂O₃. n can be 2.

Not phosphors of adjacent discharge cells and color layers having the same color, but a black color layer is formed on each of one or more row barrier ribs located at a predetermined region from the outermost row barrier rib. That is, the black color layer is formed on the row barrier ribs located at a non-effective region comprising the outermost row barrier rib.

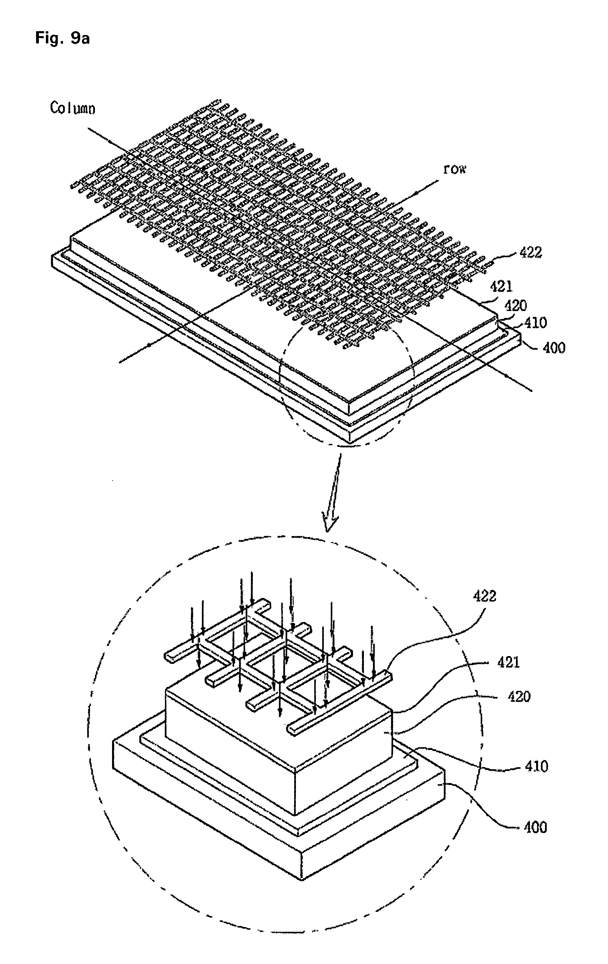

In the manufacturing method of the plasma display panel constructed above according to the second embodiment, a process of forming barrier ribs will be described with reference to FIGS. 9a to 9d.

FIGS. 9a to 9d sequentially illustrate a method of fabricating the barrier ribs of the plasma display panel according to the second embodiment.

Referring first to FIG. 9a, a lower dielectric layer 410 is formed on a rear glass 400 having electrodes (not shown) mounted therein. A barrier rib paste 420 having a predetermined thickness is formed on the lower dielectric layer 410 by a printing method, a coating method or the like. A DFR 421 is then formed on the barrier rib paste 420 by a laminating process. Photomasks 422 having a predetermined pattern are aligned on the DFR 421 and then undergo an exposure process of irradiating light such as UV.

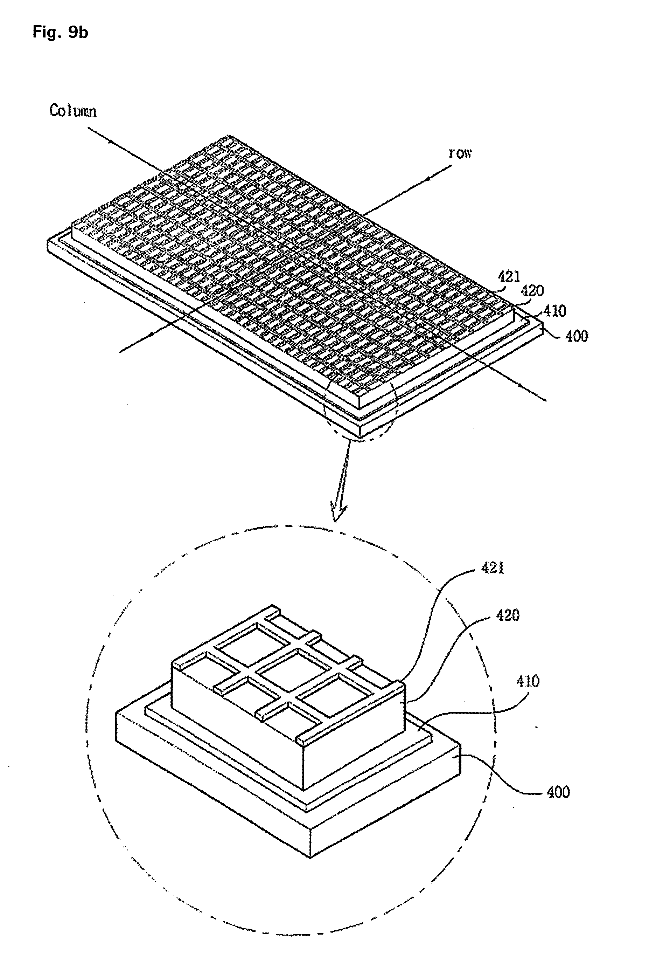

Thereafter, as shown in FIG. 9b, after the DFR 421 has experienced an exposure process, a development process is performed. Through this development process, the DFR 421 in a region that is not exposed by light (hereinafter, referred to as "unexposed region") remains on the barrier rib paste 420, whereas the DFR 421 in a region that has been exposed by light (hereinafter, referred to as "exposed region") is etched and removed.

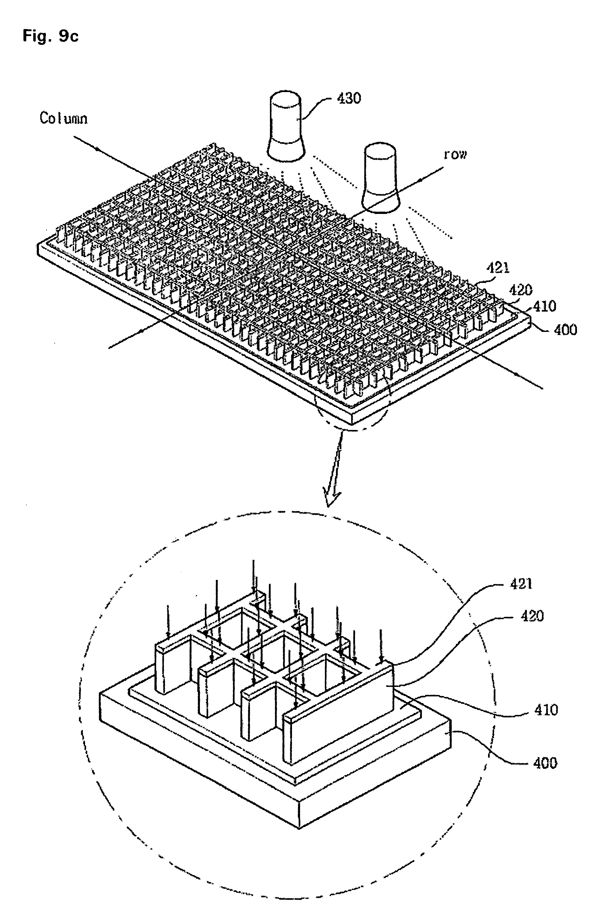

Thereafter, as shown in FIG. 9c, sandblasting apparatuses 430 are disposed on the barrier rib paste 420 and the DFR 421, which have undergone the development process, and are then driven to spray sand particles onto the barrier rib paste. The barrier rib paste 420 is cut, whereas the DFR 421 pattern corresponding to the barrier ribs is protected, due to sputtering of the sand particles.

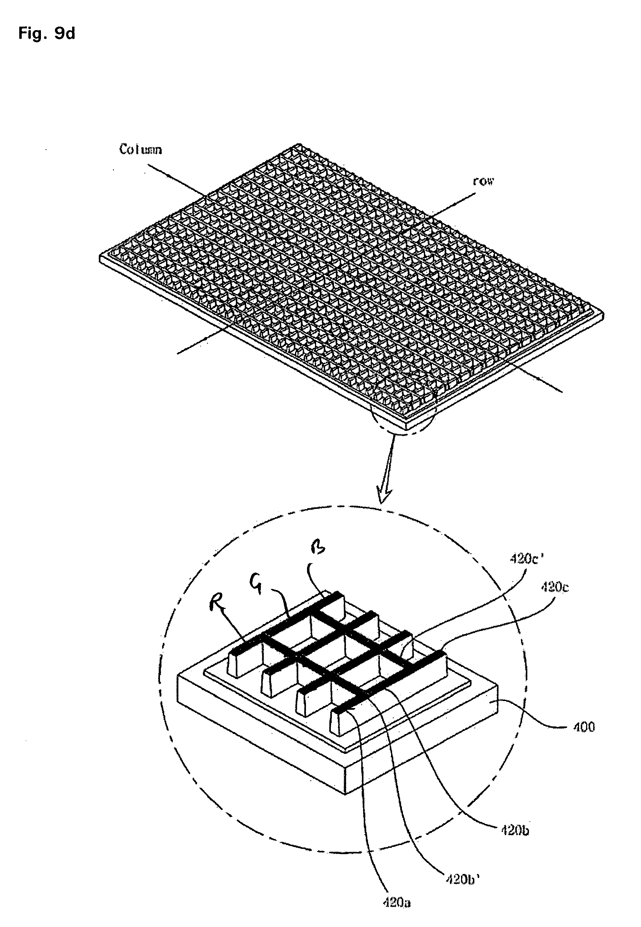

Referring next to FIG. 9d, after row and column barrier ribs are formed by performing a strip process on the barrier ribs, which have been protected by the DFR 421, color layers 420a, 420b, 420b', 420c, 420c' are formed both on the row barrier ribs, the column barrier ribs, or both the row and column barrier ribs by means of a direct patterning method. The color layers 420b, 420c can be formed using an inkjet method or a dispensing method of the direct patterning method.

The row barrier ribs and the column barrier ribs of the plasma display panel according to the second embodiment can have the same height as described above, but can have different heights. Color layers formed when the heights of row barrier ribs and column barrier ribs are different from each other are formed in the same manner as described above. Barrier ribs having a higher height, of the row barrier ribs and the column barrier ribs having different heights, as described above, are the column barrier ribs.

The row barrier ribs and the column barrier ribs having different heights as described above can improve a discharge characteristic, and an exhaust characteristic. However, when the phosphors are coated on the discharge cells that are partitioned by the row barrier ribs and the column barrier ribs, phosphors are also coated on discharge cells that should not be coated. That is, the phosphors may flow into unwanted adjacent discharge cells due to a phosphor viscosity characteristic, resulting in a mixed color of the phosphors. Accordingly, the column barrier ribs that separate the Red phosphor, the Green phosphor and the Blue phosphor in discharge spaces having the Red phosphor, the Green phosphor and the Blue phosphor coated thereon can be formed to have a higher structure than the row barrier ribs.

As shown and described in FIGS. 9a to 9d that the row barrier ribs and the column barrier ribs are formed to have a predetermined pattern by forming the DFR on the barrier rib paste and performing an exposure process on the DFR. Unlike the above, however, the row barrier ribs and the column barrier ribs can be formed through an exposure process by comprising a photoresist material in the barrier rib paste itself.

If color layers are formed to have the same color as that of a corresponding phosphor on barrier ribs that partition discharge cells on which the Red phosphor, the Green phosphor and the Blue phosphor are coated, as described above, a color temperature of the phosphors of the plasma display panel is increased and emission efficiency and brightness of the plasma display panel can be improved.

As described above, color layers are formed on barrier ribs of a plasma display panel to enhance a color temperature of phosphors coated on discharge cells. Accordingly, there is an effect in that emission efficiency and brightness can be improved.

While embodiments of the present invention have been described with reference to the particular illustrative embodiments, it is not to be restricted by the embodiments but only by the claims. It is to be appreciated that those skilled in the art can change or modify the embodiments without departing from the scope of the invention.

## Claims

1. A plasma display panel, comprising:
a plurality of discharge cells on which a Red phosphor, a Green phosphor and a Blue phosphor are coated; and
a plurality of barrier ribs partitioning the discharge cells having different phosphors coated thereon,
wherein a color layer having a predetermined color is formed on at least one of the plurality of barrier ribs.

2. The plasma display panel of claim 1, wherein color layers having the same color as the color of any one of phosphors of adjacent discharge cells are formed on at least one of the plurality of barrier ribs.

3. The plasma display panel of claim 1, wherein the color layer comprises a first color and a second color,
the first color is the same as the color of a phosphor which is coated on one of two discharge cells partitioned by one barrier rib on which the color layer is formed, and
the second color is the same as the color of a phosphor which is coated on the other of two discharge cells partitioned by the one barrier rib on which the color layer is formed.

4. The plasma display panel of claim 3, wherein the first color of the color layer formed on the right portion of the one barrier rib is the same as the color of a phosphor coated on the a discharge cell located at the right side of the one barrier rib, and
the second color of the color layer formed on the left portion of the one barrier rib is the same as the color of a phosphor coated on a discharge cell located at the left side of the one barrier rib.

5. The plasma display panel of claim 1, wherein a black color layer is formed on each of one or more barrier ribs located at a predetermined region beginning from the outermost barrier rib of the plurality of barrier ribs.

6. The plasma display panel of claim 1, wherein the area of the color layer formed on one or more barrier ribs adjacent to the discharge cell on which the Blue phosphor is coated, is larger the area of the color layer formed on one or more barrier ribs adjacent to the Red discharge cell or the Green discharge cell.

7. A plasma display panel, comprising:
a plurality of discharge cells on which a Red phosphor, a Green phosphor and a Blue phosphor are coated; and
a plurality of row barrier ribs partitioning discharge cells having the same phosphor coated thereon, of the plurality of discharge cells, and a plurality of column barrier ribs partitioning discharge cells having different phosphors coated thereon, of the plurality of discharge cells,
wherein a color layer having a predetermined color is formed on at least one of the plurality of row barrier ribs and the plurality of column barrier ribs.

8. The plasma display panel of claim 7, wherein color layers having the same color as that of any one of phosphors of adjacent discharge cells are formed on at least one of the plurality of column barrier ribs.

9. The plasma display panel of claim 7, wherein the color layer comprises a first color and a second color,
the first color is the same as the color of a phosphor which is coated on one of two discharge cells partitioned by one column barrier rib on which the color layer is formed, and
the second color is the same as the color of a phosphor which is coated on the other of two discharge cells partitioned by the one column barrier rib on which the color layer is formed.

10. The plasma display panel of claim 9, wherein the first color of the color layer formed on the right portion of the one column barrier rib is the same as the color of a phosphor coated on the a discharge cell located at the right side of the one barrier rib, and
the second color of the color layer formed on the left portion of the column one barrier rib is the same as the color of a phosphor coated on a discharge cell located at the left side of the one barrier rib.

11. The plasma display panel of claim 7, wherein a black color layer is formed on each of one or more row barrier ribs located at a predetermined region beginning from the outermost row barrier rib of the plurality of row barrier ribs.

12. The plasma display panel of claim 7, wherein a black color layer is formed on each of one or more column barrier ribs located at a predetermined region beginning from the outermost column barrier rib of the plurality of column barrier ribs.

13. The plasma display panel of claim 7, wherein the area of the color layer formed on one or more barrier ribs of the row barrier ribs and the column barrier ribs adjacent to the discharge cell on which the Blue phosphor is coated, is larger the area of the color layer formed on one or more barrier ribs of the row barrier ribs and the column barrier ribs adjacent to the Red discharge cell or the Green discharge cell.

14. A method of manufacturing a plasma display panel, comprising the steps of:
(a) coating a barrier rib paste on a dielectric material formed in a glass;
(b) locating photomasks having a predetermined pattern formed therein on the barrier rib paste, and performing an exposure and development process on the photomasks to form a plurality of barrier ribs that partition discharge cells having different phosphors coated thereon; and
(c) forming color layers having a predetermined color on at least one of the plurality of barrier ribs.

15. The method of claim 14, wherein the color layers are formed by a direct patterning method.

16. The method of claim 15, wherein the direct patterning method is either an inkjet method or a dispensing method.

17. A method of manufacturing a plasma display panel, comprising the steps of:
(a) coating a barrier rib paste on a dielectric material formed in a glass;
(b) locating photomasks having a predetermined pattern formed therein on the barrier rib paste, and performing an exposure and development process on the photomasks to form a plurality of row barrier ribs and a plurality of column barrier ribs; and
(c) forming color layers having a predetermined color on at least one of the plurality of barrier ribs.

18. The method of claim 17, wherein the color layers are formed by a direct patterning method.

19. The method of claim 17, wherein the row barrier ribs and the column barrier ribs have different heights.

20. The method of claim 19, wherein barrier ribs having a higher height, of the row barrier ribs and the column barrier ribs, are column barrier ribs.
